(19) Europäisches Patentamt / European Patent Office / Office européen des brevets

(11) **EP 2 341 088 B1**

(12) **EUROPEAN PATENT SPECIFICATION**

(45) Date of publication and mention
of the grant of the patent:
**20.06.2012 Bulletin 2012/25**

(51) Int Cl.:
***C08F 110/06*** (2006.01)     ***H01B 3/44*** (2006.01)
***B32B 27/32*** (2006.01)     ***C08J 5/18*** (2006.01)

(21) Application number: **09181009.3**

(22) Date of filing: **30.12.2009**

(54) **BOPP with homogeneous film morphology**

BOPP mit homogener Filmmorphologie

BOPP avec morphologie de film homogène

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**06.07.2011 Bulletin 2011/27**

(73) Proprietor: **Borealis AG
1220 Vienna (AT)**

(72) Inventors:
• **Gloger, Dietrich
4020, Linz (AT)**

• **Paavilainen, Juha
00510 Helsinki (FI)**

(74) Representative: **Maiwald Patentanwalts GmbH
Elisenhof
Elisenstrasse 3
80335 München (DE)**

(56) References cited:
**EP-A1- 2 186 834     EP-A1- 2 192 133
WO-A1-2008/006529     WO-A1-2008/006531
WO-A1-2008/135598**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a new polypropylene and an capacitor film made from said polypropylene, as well as the preparation of said polypropylene.

Capacitor films must withstand extreme conditions like high temperatures and high electrical breakdown strength. Additionally it is appreciated that capacitor films possess good mechanical properties like a high stiffness. Concerning the electrical breakdown strength one must consider that the overall property or performance of a system (here: a capacitor-film) is dominated by the small extreme local properties of that system. Unfortunately, it is not the strongest extreme value that matters, it is the weakest value that governs the overall performance. Thus even so it is appreciated that a sample of a capacitor film achieves high electrical breakdown values, it must be also assured that different samples of the same capacitor film exhibit also promising electrical breakdown values in average. Thus in other words the capacitor film must have continuously the same properties on each place of said film.

Accordingly to evaluate whether the capacitor film has all over good electrical breakdown performance ten small samples are cut out from said film and each specimen is subjected to an independent breakdown measurement which is performed according to IEC-60243. The small specimens are irreversibly damaged by the measurement. Due to the stochastic nature of breakdown-events, the breakdown-fields that are recorded for each of the 10 samples (from the same film) scatter quite largely and are not Gaussian-distributed, but known as being Weibull-distributed. This is a so called extreme-value distribution. It is therefore necessary to look at the scatter of results, not at the breakdown-voltage alone. The scatter of Weibull-data is characterized by the ß-parameter. The lower the ß-parameter, the larger the spread of the electrical breakdown results. In light of reliability, the scatter should be as small as possible, hence the ß-parameter as large as possible. This means that the task is not only to achieve a high electrical breakdown voltage but also a high ß-parameter. Only a high ß-parameter ensures that the high electrical breakdown voltage is actually often met by the capacitor film.

Therefore the object of the present invention is to provide a polypropylene which assures that a capacitor film made thereof withstands a high electric field strength without causing failure of the same and this performance can be effected with a rather high ß-parameter. Preferably such a polypropylene has additionally a high temperature resistance.

The present invention is based on the finding that an improved breakdown behaviour in view of the ß-parameter can be accomplished by using a polypropylene for the capacitor film featured by a rather high amount of thick lamellae determined by stepwise isothermal segregation technique (SIST). Such a polypropylene makes it possible to obtain a biaxially oriented polypropylene (BOPP) and/or a capacitor film with high electrical breakdown strength and high ß-parameter.

Thus the present invention is directed to a polypropylene having

(a) a melting temperature ($T_m$) measured according to ISO 11357-3 of at least 151.0 °C,
(b) a xylene cold soluble fraction (XCS) of not more than 1.5 wt.-% and
(c) 45.0 to 67.0 wt-% of a crystalline fraction having a lamella thickness in the tange of 7.70 to 14.09 nm, wherein said fraction is determined by the stepwise isothermal segregation technique (SIST), and
(d) at least 18.0 wt-%, more preferably at least 18.3 wt-%, yet more preferably at least 18.6 wt-%, still yet more preferably at least 19.0 wt-%, of a crystalline fraction having a lamella thickness of more than 14.09 nm, wherein said fraction is determined by the stepwise isothermal segregation technique (SIST).

Accordingly the present invention is in particular directed to a polypropylene having

(a) a melting temperature ($T_m$) measured according to ISO 11357-3 of at least 151.0 °C,
(b) a xylene cold soluble fraction (XCS) of not more than 1.5 wt.%, and
(c) at least 18.0 wt-%, more preferably at least 18.3 wt-%, yet more preferably at least 18.6 wt.%, still yet more preferably at least 19.0 wt-%, of a crystalline fraction having a lamella thickness of more than 14.09 nm, wherein said fraction is determined by the stepwise isothermal segregation technique (SIST), wherein

(i) the polypropylene is melted at 225 °C for 5 min.
(ii) then cooled with 80 °C/min to 145 °C,
(iii) held for 2 hours at 145 °C,
(iv) then cooled with 80 °C/min to 135°C,
(v) held for 2 hours at 135 °C,
(vi) then cooled with 80 °C/min to 125°C,
(vii) held for 2 hours at 125 °C,
(viii) then cooled with 80 °C/min to 115°C,
(ix) held for 2 hours at 115°C,

(x) then cooled with 80 °C/min to 105°C,
(xi) held for 2 hours at 105 °C,
(xii) then cooled down with 80 °C/min to -10 °C and
(xiii) then heated at a heating rate of 10 °C/min up to 200 °C obtaining a melting curve of said polypropylene, said melting curve in the temperature range of 50 to 200 °C is used to calculate the lamella thickness distribution according to Thomson-Gibbs equation (Eq 1.)

$$T_m = T_0 \left( 1 - \frac{2\sigma}{\Delta H_0 \cdot L} \right) \qquad (1)$$

wherein

$T_0$ = 457 K,
$\Delta H_0$ = 134 x $10^6$ J/m³,
$\sigma$ = 0,0496 J/m²,
$T_m$ is the measured temperature (K) and
$L$ is the lamella thickness (nm).

It has surprisingly been found that such a polypropylene makes it possible to obtain capacitor films with good electrical breakdown having also a high β-parameter values (see tables). It has been especially found that such high β-parameter values are only achievable in case the polypropylene is featured by a considerable amount of thick lamella, of lamella with a thickness of at least 14.09 nm.

In the following the present invention is described in more detail.

The instant polypropylene can be any polypropylene, however it is preferred that it is a random propylene copolymer or a propylene homopolymer, the latter is especially preferred.

The term "random copolymer" has to be preferably understood according to IUPAC, i.e. as a polymer in which the probability of finding a given monomeric unit at any given site in the polymer chain is independent.

In case the polypropylene is a random propylene copolymer it comprises monomers copolymerizable with propylene, for example comonomers such as ethylene and/or $C_4$ to $C_{20}$ alpha-olefins, in particular ethylene and/or $C_4$ to $C_{10}$ alpha-olefins, e.g. 1-butene and/or 1-hexene. Preferably the random propylene copolymer comprises, especially consist of, monomers copolymerizable with propylene from the group consisting of ethylene, 1-butene and 1-hexene. More specifically the random propylene copolymer comprises - apart from propylene - units derivable from ethylene and/or 1-butene. In a preferred embodiment the random propylene copolymer comprises units derivable from ethylene and propylene only. The comonomer content in the random propylene copolymer is preferably relatively low, i.e. up to 6.0 wt.-%, more preferably 0.5 to 6.0 wt.-%, still more preferably 0.5 to 4.0 wt.-%, yet more preferably 0.5 to 2.0 wt.-%.

The expression homopolymer used in the instant invention relates to a polypropylene that consists substantially, i.e. of at least 99 wt.-%, preferably of at least 99.5 wt.-%, more preferably of at least 99.8 wt.-%, of propylene units. In a preferred embodiment only propylene units in the propylene homopolymer are detectable. The comonomer content can be determined with FT infrared spectroscopy, as described below in the examples.

Preferably the polypropylene is isotactic. Accordingly it is appreciated that the polypropylene has a rather high pentad concentration, i.e. higher than 90 %, more preferably higher than 92 %, still more preferably higher than 93 % and yet more preferably higher than 95 %, like higher than 99 %.

Commercially available polypropylenes in principle useful for capacitors are featured by rather high xylene cold soluble (XCS) content. The polypropylene of the instant invention is featured by rather low xylene cold soluble (XCS) content, i.e. by a xylene cold soluble (XCS) content of below 1.5 wt.-%, more preferably of below 1.3 wt.-%, yet more preferably below 1.0 wt.-%, like below 0.8 wt.-%. Thus it is in particular appreciated that the polypropylene of the instant invention has a xylene cold soluble (XCS) content in the range of 0.3 to 1.5 wt.-%, more preferably in the range of 0.3 to 1.3 wt.-%, yet more preferably in the range of 0.4 to 1.0 wt.-%, like in the range of 0.4 to 0.8 wt.-%.

The amount of xylene cold soluble (XCS) additionally indicates that the polypropylene composition is preferably free of any elastomeric polymer component, like an ethylene propylene rubber. In other words the polypropylene shall be not a heterophasic polypropylene, i.e. a system consisting of a polypropylene matrix in which an elastomeric phase is dispersed. Such systems are featured by a rather high xylene cold soluble content.

A further essential aspect of the instant invention is that the polypropylene has a rather high melting point. Accordingly it is appreciated that the polypropylene according to this invention has a melting temperature ($T_m$) measured according to ISO 11357-3 of at least 151.0 °C, more preferably of at least 152 °C. Thus it is in particular appreciated that the melting temperature ($T_m$) measured according to ISO 11357-3 of the polypropylene is in the range of 151 to 160 °C, more preferably in the range of 151 to 155 °C, yet more preferably in the range of 152 to 159 °C, and still more preferably in the range of 152 to 155 °C.

Additionally it is appreciated that the polypropylene of the instant invention has rather high crystallization temperature ($T_c$). Thus it is preferred that the polypropylene has crystallization temperature ($T_c$) measured according to ISO 11357-3 of at least 110 °C, more preferably of at least 111 °C, most preferably of at least 113°C. Accordingly the polypropylene has preferably a crystallization temperature ($T_c$) measured according to ISO 11357-3 in the range of 110 to 120 °C, more preferably in the range of 111 to 117 °C.

The stepwise isothermal segregation technique (SIST) provides a possibility to determine the lamella thickness distribution. The precise measuring method is specified in the example section (in particular the definition of the lamella thickness of each fraction and its melt enthalpy). Thereby rather high amounts (rather high melt enthalpy [J/g]) of polymer fractions crystallizing at high temperatures indicate a rather high amount of thick lamellae. Thus it is appreciated that the polypropylene comprises at least 18.0 wt.-%, more preferably at least 18.3 wt.-%, yet more preferably at least 18.6 wt.-%, still yet more preferably at least 19.0 wt.-%, of a crystalline fraction having a lamella thickness of more than 14.09 nm, wherein said fraction is determined by the stepwise isothermal segregation technique (SIST).

Additionally it is appreciated that the polypropylene comprises not more than 67.0 wt.-%, more preferably not more than 66.0 wt.-%, like not more than 65.0 wt.-%, of a crystalline fraction having a lamella thickness in the range of 7.70 to 14.09 nm. On the other hand the crystalline fraction having a lamella thickness in the range of 7.70 to 14.09 nm should be not too low. Thus it is additionally or alternatively to the upper range preferred that the polypropylene comprises more than 45 wt.-%, more preferably more than 50 wt.-%, yet more preferably more than 55 wt.-%, still yet more preferably more than 60 wt.-%, of a crystalline fraction having a lamella thickness in the range of 7.70 to 14.09 nm Thus it is appreciated that the polypropylene according to this invention comprises a crystalline fraction having a lamella thickness in the range of 7.70 to 14.09 nm in the amount of 45.0 to 67.0 wt.-%, more preferably in the amount of 55.0 to 67.0 wt.-%, yet more preferably in the amount of 60.0 to 66.0 wt.-%, still yet more preferably in the amount of 61.0 to 65.00 wt.-%, like in the amount of 63.0 to 65.0 wt.-%.

Further it is desired that the polypropylene comprises more than 12.0 wt.-%, more preferably more than 14.0 wt.-%, like more than 15.0 wt.-%, of a crystalline fraction having a lamella thickness in the range of 2.52 to 7.69 nm. Thus it is appreciated that the polypropylene according to this invention comprises a crystalline fraction having a lamella thickness in the range of 2.52 to 7.69 nm in the amount of 12.0 to 22.0 wt.-%, more preferably in the amount of 14.0 to 20.0 wt.-%, like in the amount of 15.0 to 19.0 wt.-%.

The molecular weight distribution (MWD) is the relation between the numbers of molecules in a polymer and the individual chain length. The molecular weight distribution (MWD) is expressed as the ratio of weight average molecular weight ($M_w$) and number average molecular weight ($M_n$). The number average molecular weight ($M_n$) is an average molecular weight of a polymer expressed as the first moment of a plot of the number of molecules in each molecular weight range against the molecular weight. In effect, this is the total molecular weight of all molecules divided by the number of molecules. In turn, the weight average molecular weight ($M_w$) is the first moment of a plot of the weight of polymer in each molecular weight range against molecular weight.

The number average molecular weight ($M_n$) and the weight average molecular weight ($M_w$) as well as the molecular weight distribution (MWD) are determined by size exclusion chromatography (SEC) using Waters Alliance GPCV 2000 instrument with online viscometer. The oven temperature is 140 °C. Trichlorobenzene is used as a solvent (ISO 16014).

Accordingly it is preferred that the inventive polypropylene has a weight average molecular weight ($M_w$) from 100,000 to 600,000 g/mol, more preferably from 200,000 to 500,000 g/mol.

The number average molecular weight ($M_n$) of the polypropylene is preferably in the range of 5,000 to 400,000 g/mol, more preferably from 10,000 to 300,000 g/mol.

A broad molecular weight distribution (MWD) improves the processability of the polypropylene. Accordingly it is appreciated that the molecular weight distribution (MWD) measured according to ISO 16014 is at least 2.8, more preferably at least 3.0, like 3.3. On the other hand a rather broad molecular weight distribution (MWD) indicates rather high amount of low molecular weight fractions which contribute to the xylene soluble content whithout improving the dilectrical performance. Therefore, in an alternative embodiment the molecular weight distribution (MWD) is preferably between 2.8 to 8.0, still more preferably in the range of 3.0 to 5.0, like 3.0 to 3.4, yet more preferably in the range of 3.3 to 3.5.

Furthermore, it is preferred that the polypropylene of the present invention has a melt flow rate (MFR) given in a specific range. The melt flow rate measured under a load of 2.16 kg at 230 °C (ISO 1133) is denoted as $MFR_2$ (230 °C). Accordingly, it is preferred that in the present invention the polypropylene has an $MFR_2$ (230 °C) of more than 2.0 g/10min, more preferably of more than 3.0 g/10min. Accordingly it is appreciated that the $MFR_2$ (230 °C) measured according to ISO 1133 is in the range of 2.0 to 10.0 g/10min, more preferably in the range of 2.0 to 6.0 g/10min, like in the range of 2.0 to 4.0 g/10min, still more preferably in the range of 3.0 to 6.0 g/10min.

The polypropylene can be further unimodal or multimodal, like bimodal in view of the molecular weight distribution and/or the comonomer content distribution.

The expression "multimodal" or "bimodal" used herein refers to the modality of the polymer, i.e.

■ the form of its molecular weight distribution curve, which is the graph of the molecular weight fraction as a function of its molecular weight,

or

■ the form of its comonomer content distribution curve, which is the graph of the comonomer content as a function of the molecular weight of the polymer fractions.

It is in particular preferred that the polypropylene -if it is not unimodal- is multimodal, like bimodal, in view of its molecular weight distribution curve. Accordingly the polypropylene of the instant invention may comprise a first fraction having an MFR$_2$ (230 °C) in the range of 0.3 to 3.0 g/10min and a second fraction having an MFR$_2$ (230 °C) in the range of 1.0 to 50.0 g/10min. Even more preferred the first fraction has an lower MFR$_2$ (230 °C) than the second fraction. Preferably the first fraction is produced in a loop reactor whereas the second fraction is produced in a gas phase reactor.

Further it is appreciated that the polypropylene is of linear structure and thus does not show (or nearby does not show) a kind of branching. Accordingly it is appreciated that the polypropylene of the instant invention has preferably a branching index g' of not less than 0.9, preferably more than 0.9, like at least 0.95. In other words if the polypropylene has some kind of branching it shall be rather moderate. Accordingly the branching index g' of the polypropylene is preferably in the range of 0.9 to 1.0, more preferably in the range of more than 0.9 to 1.0, like in the range of 0.96 to 1.0. In an especially preferred embodiment the polypropylene shows no branching, i.e. the polypropylene has a branching index g' of 1.0. The branching index g' is defined as g'=[IV$_{br}$]/[IV]$_{lin}$ in which g' is the branching index, [IV$_{br}$] is the intrinsic viscosity of the branched polypropylene and [IV]$_{lin}$ is the intrinsic viscosity of the linear polypropylene having the same weight average molecular weight (within a range of ± 3%) as the branched polypropylene. Thereby, a low g'-value is an indicator for a high branched polymer. In other words, if the g'-value decreases, the branching of the polypropylene increases. The exact determination of the g'-value is specified in the example section.

As the polypropylene according to this invention is preferably of non-branched structure it does also not show a significant amount of gel content. Gels are a typical phenomena of polypropylenes being crosslinked. Thus the gel content is a good indicator for the chemical modification of the polypropylene. Accordingly the polypropylene of the present invention is featured by relatively moderate gel content, i.e. of not more than 0.50 wt.-%, more preferably of not more than 0.25 wt.-%, still more preferably of not more than 0.15 wt.-%, like below 0.15 wt.-%, yet more preferably not more than 0.10 wt.-%, determined as the relative amount of polymer insoluble in boiling xylene (xylene hot insoluble fraction, XHI). In an especially preferred embodiment no gel content is detectable.

As will be described in detail below the polypropylene of the instant invention is obtainable by the use of a specific metallocene catalyst system. Accordingly the polypropylene of the instant invention has been not produced by a Ziegler-Natta catalyst. Thus it is further preferred that the titanium (Ti) residue content within the polypropylene is preferably below 10 ppm, even more preferred titanium (Ti) is not detectable.

Further as the catalyst used in the above defined process is non-supported, it is preferred that the silicon (Si) residue content within the polypropylene is below 10 ppm, more preferably below 5 ppm, like below 1 ppm most preferably below 0.5 ppm. In a specific embodiment no silicon (Si) within the polypropylene is detectable.

The present invention is not only directed to the polypropylene as such but also to its use. Accordingly the polypropylene is preferably used as biaxially oriented film and/or as a capacitor film. Moreover the polypropylene of the instant invention is used to accomplish a value of the β-parameter (Weibull-parameter) of the electrical breakdown measured according to IEC-60243 of more than 8, preferably more than 10, yet more preferably more than 13, still yet more preferably more than 15, like more than 18.

The polypropylene may comprise additives known in the art, like antioxidants. However any additives which negatively influences the electrical breakdown behavior should be avoided.

Further the invention is also directed to a biaxially oriented polypropylene film, wherein the polypropylene is a polypropylene as defined in the present invention. Preferably the biaxially oriented polypropylene film has a stretching ratio of at least 5 times in the machine direction and 5 times in the transverse direction, more preferably has the stretching ration at least 9 times in the machine direction and 5 times in the transverse direction.

Additionally the polypropylene of the instant invention can be employed in capacitor films. In such cases the capacitor film comprises at least 80 wt.-%, more preferably at least 90 wt.-%, yet more preferably at least 99 wt.-%. In an especially preferred embodiment the capacitor film consists of the polypropylene according to this invention. Further preferred the capacitor film is a biaxially oriented polypropylene film according to this invention.

In the following the preparation of the inventive polypropylene is described in more detail.

The polypropylene of this invention has been in particular obtained by a new catalyst system having a surface area measured according to ASTM D 3663 (N$_2$) of below 20 m$^2$/g and comprising a catalyst being the transition metal compound of formula (I)

$$(Cp)_2RZrX_2 \qquad (I)$$

wherein

X    is independently a monovalent anionic ligand, such as a σ-ligand,

Cp    is an organic ligand selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl, with the proviso that both Cp-ligands are selected from the above stated group and both Cp-ligands are chemically the same, i.e. are identical

R    is a bridging group linking the two Cp ligands, wherein R has the formula (II)

$$-Y(R')_2- \qquad (II)$$

wherein

Y is C, Si or Ge, preferably Si,

R' is $C_1$ to $C_{20}$ alkyl, $C_4$ to $C_{10}$ cyclo-alkyl, $C_6$-$C_{12}$ aryl, $C_7$-$C_{12}$ arylalkyl, or trimethylsilyl,

with the proviso that both R'-residues are selected from the above stated group and both R'-residues are chemically different.

Due to the use of the catalyst system with a very low surface area comprising the specific catalyst the manufacture of the above defined polypropylene is possible.

Furthermore it is preferred, that the catalyst system has a surface area of lower than 15 $m^2$/g, yet still lower than 10 $m^2$/g and most preferred lower than 5 $m^2$/g. The surface area according to this invention is measured according to ASTM D 3663 ($N_2$).

Additionally it is appreciated that the catalyst system has a porosity of less than 1.40 ml/g, more preferably less than 1.30 ml/g and most preferably less than 1.00 ml/g. The porosity has been measured according to ASTM 4641 ($N_2$). In another preferred embodiment the porosity is not detectable when determined with the method applied according to ASTM 4641 ($N_2$).

It is in particular preferred that the porosity not detectable when applying the method according to ASTM 4641 ($N_2$) and has a surface area measured according to ASTM D 3663 ($N_2$) of less than 5 $m^2$/g

The term "δ-ligand" is understood in the whole description in a known manner, i.e. a group bonded to the metal at one or more places via a sigma bond. A preferred monovalent anionic ligand is halogen, in particular chlorine (Cl).

Preferably, the catalyst is of formula (I) indicated above, wherein each X is chlorine (C1) and/or both identical Cp-ligands are substituted.

The optional one or more substituent(s) bonded to cyclopentadienyl, indenyl, tetrahydroindenyl, or fluorenyl may be selected from a group including halogen, hydrocarbyl (e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR"$_3$, -OSiR"$_3$, -SR", -PR"$_2$ and -NR"$_2$, wherein each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl.

More preferably both identical Cp-ligands are indenyl moieties wherein each indenyl moiety bear one or two substituents as defined above. More preferably each of the identical Cp-ligands is an indenyl moiety bearing two substituents as defined above, with the proviso that the substituents are chosen in such are manner that both Cp-ligands are of the same chemical structure, i.e. both Cp-ligands have the same substituents bonded to chemically the same indenyl moiety.

Still more preferably both identical Cp-ligands are indenyl moieties wherein the indenyl moieties comprise at least at the five membered ring of the indenyl moiety, more preferably at 2-position, a substituent selected from the group consisting of alkyl, such as $C_1$-$C_6$ alkyl, e.g. methyl, ethyl, isopropyl, and trialkyloxysiloxy, wherein each alkyl is independently selected from $C_1$-$C_6$ alkyl, such as methyl or ethyl, with proviso that the indenyl moieties of both Cp-ligands are of the same chemical structure, i.e. both Cp-ligands have the same substituents bonded to chemically the same indenyl moiety.

Still more preferred both identical Cp-ligands are indenyl moieties wherein the indenyl moieties comprise at least at the six membered ring of the indenyl moiety, more preferably at 4-position, a substituent selected from the group consisting of a $C_6$-$C_{20}$ aromatic ring moiety, such as phenyl or naphthyl, preferably phenyl, which is optionally substituted with one or more substitutents, such as $C_1$-$C_6$ alkyl, and a heteroaromatic ring moiety, with proviso that the indenyl moieties of both Cp-ligands are of the same chemical structure, i.e. both Cp-ligands have the same substituents bonded to chemically the same indenyl moiety.

Yet more preferably both identical Cp-ligands are indenyl moieties wherein the indenyl moieties comprise at the five membered ring of the indenyl moiety, more preferably at 2-position, a substituent and at the six membered ring of the indenyl moiety, more preferably at 4-position, a further substituent, wherein the substituent of the five membered ring is selected from the group consisting of alkyl, such as $C_1$-$C_6$ alkyl, e.g. methyl, ethyl, isopropyl, and trialkyloxysiloxy, preferably is methyl, and the further substituent of the six membered ring is selected from the group consisting of a $C_6$-$C_{20}$ aromatic ring moiety, such as phenyl or naphthyl, preferably phenyl, which is optionally substituted with one or more substituents, such as $C_1$-$C_6$ alkyl, like tert-butyl, and a heteroaromatic ring moiety, with proviso that the indenyl moieties of both Cp-ligands are of the same chemical structure, i.e. both Cp-ligands have the same substituents bonded to chemically the same indenyl moiety.

It is in particular appreciated that both identical Cp-ligands are indenyl moieties wherein the indenyl moieties comprise at the five membered ring of the indenyl moiety at the 2-position a substituent and at the six membered ring of the indenyl moiety at the 4-position a further substituent, wherein the substituent of the five membered ring is selected from the group consisting of methyl, ethyl and isopropyl, and the further substituent of the six membered ring is selected from the group consisting of phenyl, $C_1$-$C_6$ alkyl substituted phenyl, like 4-tert-butyl-phenyl, naphthyl, and $C_1$-$C_6$ alkyl substituted naphthyl, with proviso that the indenyl moieties of both Cp-ligands are of the same chemical structure, i.e. both Cp-ligands have the same substituents bonded to chemically the same indenyl moiety.

Concerning the linking group "R" of formula (II)

$$-Y(R')_2- \qquad (II)$$

it is preferred that

Y is Si
R' is C, to $C_{10}$ alkyl, $C_4$ to $C_{10}$ cyclo-alkyl, or $C_6$-$C_{12}$ aryl,
with the proviso that both R'-residues are selected from the above stated group and both R'-residues are chemically different.

Accordingly in a specific embodiment the catalyst is of formula (III)

$$(Cp)_2RZrCl_2 \qquad (III)$$

wherein

Cp    is a substituted indenyl with a substituent at the 2-position of the five membered ring and a substituent at the 4-position of the six membered ring, wherein the substituent of the five membered ring is methyl or ethyl and the substituent of the six membered ring is $C_1$-$C_6$ alkyl substituted phenyl, like 4-methyl-phenyl or 4-tert-butyl-phenyl (the latter especially preferred), with the proviso that both Cp-ligands are chemically the same, i.e. are identical,
R    is a bridging group linking the two Cp ligands, wherein R has the formula (IV)

$$-Si(R')_2- \qquad (IV)$$

wherein
R' is selected from the group consisting of methyl, ethyl, iso-propyl, cyclo-hexyl, 4-$C_1$ to $C_{10}$ alkyl cyclo-hexyl, like 4-methyl-cyclo-hexyl,

with the proviso that both R'-residues are selected from the above stated group and both R'-residues are chemically different.

In an especially preferred embodiment the catalyst is rac-methyl(cyclohexyl)silanediyl bis(2-methyl-4-(4-tert-butylphenyl)indenyl)zirconium dichloride.

More preferred the catalyst is not supported on any external inorganic or organic support, like silica, alumina or porous polymeric support material

The above described catalyst system is prepared according to the methods described in WO 01/48034.

It is in particular preferred that the catalyst system is obtainable by the emulsion solidification technology as described in WO 03/051934.

Hence the catalyst system is preferably in the form of solid catalyst particles, obtainable by a process comprising the steps of

a) preparing a solution of one or more catalyst components;
b) dispersing said solution in a solvent immiscible therewith to form an emulsion in which said one or more catalyst components are present in the droplets of the dispersed phase,

c) solidifying said dispersed phase to convert said droplets to solid particles and optionally recovering said particles to obtain said catalyst.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or - cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$ alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

The recovered particles have preferably an average size range of 5 to 200 $\mu$m, more preferably 10 to 100 $\mu$m

Moreover, the form of solidified particles have preferably a spherical shape, a predetermined particles size distribution and a surface area as mentioned above of preferably less than 25 $m^2$/g, still more preferably less than 20 $m^2$/g, yet more preferably less than 15 $m^2$/g, yet still more preferably less than 10 $m^2$/g and most preferably less than 5 $m^2$/g, wherein said particles are obtained by the process as described above.

For further details, embodiments and examples of the continuous and dispersed phase system, emulsion formation method, emulsifying agent and solidification methods reference is made e.g. to the above cited international patent application WO 03/051934.

The above described symmetric catalyst components are prepared according to the methods described in WO 01/48034.

As mentioned above the catalyst system may further comprise an activator as a cocatalyst, as described in WO 03/051934.

Preferred as cocatalysts for metallocenes, if desired, are the aluminoxanes, in particular the $C_1$-$C_{10}$-alkylaluminoxanes, most particularly methylaluminoxane (MAO). Such aluminoxanes can be used as the sole cocatalyst or together with other cocatalyst(s). Thus besides or in addition to aluminoxanes, other caption complex forming catalysts activators can be used. Said activators are commercially available or can be prepared according to the prior art literature.

Further aluminoxane cocatalysts are described i.e. in WO 94/28034 which is incorporated herein by reference. These are linear or cyclic oligomers of having up to 40, preferably 3 to 20, -(Al(R"')O)- repeat units (wherein R"' is hydrogen, $C_1$-$C_{10}$-alkyl (preferably methyl) or $C_6$-$C_{18}$-aryl or mixtures thereof).

The use and amounts of such activators are within the skills of an expert in the field. As an example, with the boron activators, 5:1 to 1:5, preferably 2:1 to 1:2, such as 1:1, ratio of the transition metal to boron activator may be used. In case of preferred aluminoxanes, such as methylaluminumoxane (MAO), the amount of A1, provided by aluminoxane, can be chosen to provide a molar ratio of Al:transition metal e.g. in the range of 1 to 10 000, suitably 5 to 8000, preferably 10 to 7000, e.g. 100 to 4000, such as 1000 to 3000. Typically in case of solid (heterogeneous) catalyst the ratio is preferably below 500.

The quantity of cocatalyst to be employed in the catalyst of the invention is thus variable, and depends on the conditions and the particular transition metal compound chosen in a manner well known to a person skilled in the art.

Any additional components to be contained in the solution comprising the organotransition compound may be added to said solution before or, alternatively, after the dispersing step.

Furthermore, the present invention is related to the use of the above-defined catalyst system for the production of a polypropylene according to this invention.

In addition, the present invention is related to the process for producing the inventive polypropylene, whereby the catalyst system as defined above is employed. Furthermore it is preferred that the process temperature is higher than 60 °C. Preferably, the process is a multi-stage process to obtain multimodal polypropylene as defined above.

Multistage processes include also bulk/gas phase reactors known as multizone gas phase reactors for producing multimodal propylene polymer.

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379 and WO 97/22633.

A multimodal polypropylene according to this invention is produced preferably in a multi-stage process in a multi-stage reaction sequence as described in WO 92/12182. The contents of this document are included herein by reference.

It has previously been known to produce multimodal, in particular bimodal, polypropylene in two or more reactors connected in series, i.e. in different steps (a) and (b).

According to the present invention, the main polymerization stages are preferably carried out as a combination of a bulk polymerization/gas phase polymerization.

The bulk polymerizations are preferably performed in a so-called loop reactor.

In order to produce the multimodal polypropylene according to this invention, a flexible mode is preferred. For this reason, it is preferred that the composition be produced in two main polymerization stages in combination of loop reactor/gas phase reactor.

Optionally, and preferably, the process may also comprise a prepolymerization step in a manner known in the field and which may precede the polymerization step (a).

The process is preferably a continuous process.

Preferably, in the process for producing the propylene polymer as defined above the conditions for the bulk reactor of step (a) may be as follows:

- the temperature is within the range of 40 °C to 110 °C, preferably between 60 °C and 100 °C, 70 to 90 °C,
- the pressure is within the range of 20 bar to 80 bar, preferably between 40 bar to 70 bar,
- hydrogen can be added for controlling the molar mass in a manner known per se.

Subsequently, the reaction mixture from the bulk (bulk) reactor (step a) is transferred to the gas phase reactor, i.e. to step (b), whereby the conditions in step (b) are preferably as follows:

- the temperature is within the range of 50 °C to 130 °C, preferably between 60 °C and 100 °C,
- the pressure is within the range of 5 bar to 50 bar, preferably between 15 bar to 40 bar,
- hydrogen can be added for controlling the molar mass in a manner known per se.

The residence time can vary in both reactor zones. In one embodiment of the process for producing the propylene polymer the residence time in bulk reactor, e.g. loop is in the range 0.5 to 5 hours, e.g. 0.5 to 2 hours and the residence time in gas phase reactor will generally be 1 to 8 hours.

If desired, the polymerization may be effected in a known manner under supercritical conditions in the bulk, preferably loop reactor, and/or as a condensed mode in the gas phase reactor.

The process of the invention or any embodiments thereof above enable highly feasible means for producing and further tailoring the propylene polymer composition within the invention, e.g. the properties of the polymer composition can be adjusted or controlled in a known manner e.g. with one or more of the following process parameters: temperature, hydrogen feed, comonomer feed, propylene feed e.g. in the gas phase reactor, catalyst, the type and amount of an external donor (if used), split between components.

The above process enables very feasible means for obtaining the reactor-made polypropylene as defined above.

The capacitor film can be prepared by conventional drawing processes known in the art. Accordingly the process for the manufacture of a capacitor film according to this invention comprises the use of the polypropylene as defined herein and its forming into a film preferably by the tenter method known in the art.

The tenter method is in particular a method in which the polypropylene as defined herein is melt extruded from a slit die such as a T-die and cooled on a cooling drum obtaining an undrawn sheet. Said sheet is pre-heated for example with a heated metal roll and then drawn in the length direction between a plurality of rolls over which a difference in peripheral speeds is established and then both edges are gripped with grippers and the sheet is drawn in the transverse direction in an oven by means of a tenter resulting in a biaxially drawn film. The temperature of said stretched sheet during the longitudinal drawing is preferably controlled in such a way as to be within the temperature range of the melting point of the polypropylene as defined herein (- 15 or + 5°C). The uniformity of the film thickness on transverse drawing can be evaluated with the method in which a fixed region on the film is masked after drawing in the length direction and measuring the actual drawing factor by measuring the spacing of the said masking after transverse drawing.

Subsequently, the film can treated by corona discharge in air, nitrogen, carbon dioxide gas or any of the mixtures on the surface to be metalized, to improve the adhesive strength to the metal to be deposited, and wound by a winder.

The obtained film can set in a vacuum metallizer, and the film is preferably coated with an oil to form an insulation groove suitable for the purpose concerned, using a gravure coater, etc. Then, the metal suitable for the purpose concerned is deposited to achieve a predetermined layer resistance. Furthermore, as required, metallization is carried out through a comb-shaped deposition preventive plate to continuously change the resistance value in the transverse direction of the film. The metalized film is slit, to make two metalized reels as a pair for making a capacitor device. Then, the reels are wound to form a device and the device is formed to be flat by a thermal press, being followed by metal spraying at the ends, attaching of leads, as required impregnation with an insulating oil, and packaging to make a capacitor.

Moreover the present invention is directed to the use of the capacitor film as defined herein in a capacitor.

In addition, the present invention is directed to a capacitor comprising at least one layer comprising a capacitor film as defined herein. Additionally it is preferred that the capacitor comprises a metal layer, in particular a metal layer obtained by the above described process.

The present invention will now be described in further detail by the following examples.

EXAMPLES

A. Measuring methods

The following definitions of terms and determination methods apply for the above general description of the invention as well as to the below examples unless otherwise defined.

NMR-spectroscopy measurements:

The $^{13}$C-NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988).and Chujo R, et al,Polymer 35 339 (1994).

The NMR-measurement was used for determining the mmmm pentad concentration in a manner well known in the art.

Mw, Mn, MWD

Mw/Mn/MWD are measured by Gel Permeation Chromatography (GPC) according to the following method:

The weight average molecular weight (Mw), the number average molecular weight (Mn), and the molecular weight distribution (MWD = Mw/Mn) is measured by a method based on ISO 16014-1:2003 and ISO 16014-4:2003. A Waters Alliance GPCV 2000 instrument, equipped with refractive index detector and online viscosimeter is used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 $\mu$L of sample solution are injected per analysis. The column set is calibrated using relative calibration with 19 narrow MWD polystyrene (PS) standards in the range of 0.5 kg/mol to 11 500 kg/mol and a set of well characterized broad polypropylene standards. All samples are prepared by dissolving 5 to 10 mg of polymer in 10 mL (at 160 °C) of stabilized TCB (same as mobile phase) and keeping for 3 hours with continuous shaking prior sampling in into the GPC instrument.

**Molecular weight averages, molecular weight distribution, branching index (Mn, Mw, MWD, g') determined by SEC/VISC-LS**

Molecular weight averages (Mw, Mn), molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4 2003. A PL 220 (Polymer Laboratories) GPC equipped with a refractive index (RI), an online four capillary bridge viscometer (PL-BV 400-HT), and a dual light scattering detector (PL-LS 15/90 light scattering detector) with a 15° and 90° angle was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 µL of sample solution were injected per analysis. The corresponding detector constants as well as the inter detector delay volumes were determined with a narrow PS standard (MWD = 1.01) with a molar mass of 132900 g/mol and a viscosity of 0.4789 dl/g. The corresponding dn/dc for the used PS standard in TCB is 0,053 $cm^3$/g.

The molar mass at each elution slice was determined by light scattering using a combination of two angels 15° and 90°. All data processing and calculation was performed using the Cirrus Multi-Offline SEC-Software Version 3.2 (Polymer Laboratories a Varian inc. Company). The molecular weight was calculated using the option in the Cirrus software "use combination of LS angles" in the field "sample calculation options subfield slice MW data from".

The data processing is described in details in G. Saunders, P. A. G: Cormack, S. Graham; D. C. Sherrington, Macromolecules, 2005, 38, 6418-6422. Therein the $Mw_i$ at each slice is determined by the 90° angle by the following equation:

$$Mw_i = \frac{K_{LS} * R(\theta)^{90°}}{\frac{dn}{dc} * R * P(\theta)}$$

The Rayleigh ratio $R(\theta)^{90°}$ of the 90° angle is measured by the LS detector and R is the response of the RI-detector. The particle scatter function $P(\theta)$ is determined by the usage of both angles (15° and 90°) as described by C. Jackson and H. G. Barth(C. Jackson and H. G. Barth, "Molecular Weight Sensitive Detectors" in Handbook of Size Exclusion Chromatography and related techniques, C.-S. Wu, 2nd ed., Marcel Dekker, New York, 2004, p.103). For the low and high molecular region in which less signal of the LS detector or RI detector respectively was achieved a linear fit was used to correlate the elution volume to the corresponding molecular weight.

The dn/dc used in the equation is calculated from the detector constant of the RI detector, the concentration c of the sample and the area of the detector response of the analysed sample. The relative amount of branching is determined using the g'-index of the branched polymer sample. The long chain branching (LCB) index is defined as g'= $[\eta]_{br}/[\eta]_{lin}$. It is well known if the g' value increases the branching content decreases. $[\eta]$ is the intrinsic viscosity at 160 °C in trichloorbenzene of the polymer sample at a certain molecular weight and is measured by an online viscosity and a concentration detector. The intrinsic viscosities were measured as described in the handbook of the Cirrus Multi-Offline SEC-Software Version 3.2 with use of the Solomon-Gatesman equation.

The necessary concentration of each elution slice is determined by a RI detector. $[\eta]_{lin}$ is the intrinsic viscosity of a linear sample and $[\eta]_{br}$ the viscosity of a branched sample of the same molecular weight and chemical composition. The number average of $g'_n$ and the weight average $g'_w$ are defined as:

$$g'_n = \frac{\sum_0^i a_i * \frac{[\eta]_{br,i}}{[\eta]_{lin,i}}}{\sum a_i}$$

$$g'_w = \frac{\sum_0^i A_i * \frac{[\eta]_{br,i}}{[\eta]_{lin,i}}}{\sum_0^i A_i * \left(\frac{[\eta]_{br,i}}{[\eta]_{lin,i}}\right)^2}$$

where $a_i$ is dW/dlogM of fraction i and $A_i$ is the cumulative dW/dlogM of the polymer up to fraction i. The $[\eta]_{lin}$ of the linear reference (linear isotactic PP) over the molecular weight was measured with an online viscosity detector. Following K and $\alpha$ values were obtained (K = 30.68*$10^{-3}$ and $\alpha$ = 0.681) from the linear reference in the molecular weight range of logM= 4.5-6.1. The $[\eta]_{lin}$ per slice molecular weight for the g' calculations was calculated by following relationship $[\eta]_{lin,i}$ = K*$M_i^\alpha$. $[\eta]_{br,i}$ was measured for each particular sample by online viscosity and concentration detector.

**Melt Flow Rate (MFR)**

The melt flow rates are measured with a load of 2.16 kg ($MFR_2$) at 230 °C. The melt flow rate is that quantity of polymer in grams which the test apparatus standardised to ISO 1133 extrudes within 10 minutes at a temperature of 230 °C under a load of 2.16 kg.

**Comonomer content**

Comonomer content (wt%) is determined in a known manner based on Fourier transform infrared spectroscopy (FTIR) determination calibrated with $C^{13}$-NMR.

**Xylene cold soluble fraction (XCS wt%)**

The xylene cold soluble fraction (XCS) is determined at 23 °C according to ISO 6427. **The gel content** is assumed to be identical to the xylene hot insoluble (XHI) fraction, which is determined by extracting 1 g of finely cut polymer sample with 350 ml xylene in a Soxhlet extractor for 48 hours at the boiling temperature. The remaining solid amount is dried at 90°C and weighed for determining the insolubles amount.

**Melting temperature $T_m$, crystallization temperature $T_c$**, is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy (**Hm and Hc**) were measured by the DSC method according to ISO 11357-3.

**Elementary Analysis**

The below described elementary analysis is used for determining the content of elementary residues which are mainly originating from the catalyst, especially the Al-, B-, and Si-residues in the polymer. Said Al-, B- and Si-residues can be in any form, e.g. in elementary or ionic form, which can be recovered and detected from polypropylene using the below described ICP-method. The method can also be used for determining the Ti-content of the polymer. It is understood that also other known methods can be used which would result in similar results.

ICP-Spectrometry (Inductively Coupled Plasma Emission)

ICP-instrument: The instrument for determination of Al-, B- nad Si-content is ICP Optima 2000 DV, PSN 620785 (supplier Perkin Elmer Instruments, Belgium) with software of the instrument.

Detection limits are 0.10 ppm (Al), 0.10 ppm (B), 0.10 ppm (Si).

The polymer sample was first ashed in a known manner, then dissolved in an appropriate acidic solvent. The dilutions of the standards for the calibration curve are dissolved in the same solvent as the sample and the concentrations chosen so that the concentration of the sample would fall within the standard calibration curve.

ppm: means parts per million by weight

Ash content: Ash content is measured according to ISO 3451-1 (1997) standard.

Calculated ash, Al- Si- and B-content:

The ash and the above listed elements, Al and/or Si and/or B can also be calculated form a polypropylene based on the polymerization activity of the catalyst as exemplified in the examples. These values would give the upper limit of the presence of said residues originating from the catalyst.

Thus the estimate catalyst residue is based on catalyst composition and polymerization productivity, catalyst residues in the polymer can be estimated according to:

$$\text{Total catalyst residues [ppm]} = 1 \, / \, \text{productivity } [kg_{pp}/g_{catalyst}] \times 100$$

$$\text{Al residues [ppm]} = w_{Al, \, catalyst} \, [\%] \times \text{total catalyst residues [ppm]} \, / \, 100$$

$$\text{Zr residues [ppm]} = w_{\text{Zr, catalyst}} \text{ [\%]} \times \text{total catalyst residues [ppm]} / 100$$

(Similar calculations apply also for B, Cl and Si residues)

Chlorine residues content: The content of Cl-residues is measured from samples in the known manner using X-ray fluorescence (XRF) spectrometry. The instrument was X-ray fluorescention Philips PW2400, PSN 620487, (Supplier: Philips, Belgium) software X47. Detection limit for Cl is 1 ppm.

## Electrical breakdown strength (EB63%)

It follows standard IEC 60243- part 1 (1988).
The method describes a way to measure the electrical breakdown strength for insulation materials on compression moulded plaques.
Definition:

Eb:

$$E_b = U_b/d$$

The electrical field strength in the test sample at which breakdown occurs. In homogeneous plaques and films this corresponds to the electrical electrical breakdown strength divided by the thickness of the plaque/film (d), unit: kV/mm. For each BOPP film, 10 individual breakdown measurements are performed. The 10 individual breakdown results per BOPP film are evaluated using a Weibull plot, wherein the 63 percentile corresponds to the breakdown strength (Eb63%). The ß-parameter is the slope of the linear regression curve through these 10 points.
The electrical breakdown strength is determined at 50 Hz within a high voltage cabinet using metal rods as electrodes as described in IEC60243-1 (4.1.2). The voltage is raised over the film/plaque at 2 kV/s until a breakdown occurs.
**Porosity**: BET with $N_2$ gas, ASTM 4641, apparatus Micromeritics Tristar 3000; sample preparation: at a temperature of 50 °C, 6 hours in vacuum.
**Surface area**: BET with $N_2$ gas ASTM D 3663, apparatus Micromeritics Tristar 3000: sample preparation at a temperature of 50 °C, 6 hours in vacuum.

## Stepwise Isothermal Segregation Technique (SIST)

The isothermal crystallisation for SIST analysis was performed in a Mettler TA820 DSC on $3\pm0.5$ mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C
(ix) held for 2 hours at 115 °C,
(x) then cooled with 80 °C/min to 105 °C
(xi) held for 2 hours at 105 °C.

After the last step the sample was cooled down with 80 C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy of fractions melting within temperature intervals of 50 to 60 °C; 60 to 70 °C; 70 to 80 °C; 80 to 90 °C; 90 to 100 °C; 100 to 110 °C; 110 to 120 °C; 120 to 130 °C; 130 to 140 °C; 140 to 150 °C; 150 to 160 °C; 160 to 170 °C; 170 to 180 °C;

180 to 190 °C; 190 to 200°C.

The melting curve of the material crystallised this way can be used for calculating the lamella thickness distribution according to Thomson-Gibbs equation (Eq 1.).

$$T_m = T_0 \left( 1 - \frac{2\sigma}{\Delta H_0 \cdot L} \right) \qquad (1)$$

where $T_0 = 457K$, $\Delta H_0 = 134 \times 10^6$ J/m$^3$, $\sigma = 0{,}049.6$ J/m$^2$ and L is the lamella thickness. **Tensile Modulus** is measured according to ISO 527-2 (cross head speed = 50 mm/min; 23 °C) using injection molded specimens as described in EN ISO 1873-2 (dog bone shape, 4 mm thickness).

**B. Examples**

The used catalyst was prepared according to example 5 of WO 03/051934 wherein the catalyst used therein was replaced by rac-methyl(cyclohexyl)silanediyl bis(2-methyl-4-(4-tert-butylphenyl)indenyl)zirconium dichloride. Rac-methyl(cyclohexyl)silanediyl bis(2-methyl-4-(4-tert-butylphenyl)indenyl)zirconium dichloride was prepared according to WO 2005 105863 A2, examples 17-18.

Catalyst preparation

In a jacketed 90 dm$^3$ glasslined stainless steel reactor the complex solution was prepared at - 5°C adding 0,85 kg of a 24,5 wt% ((2,2,3,3,4,4,5,5,6,6,7,7,8,8,9,9,9-heptadecafluorononyl)oxirane)/toluene solution very slowly (3.4 ml/min) to 13,5 kg 30wt% MAO(methylaluminoxane )/toluene solution. The temperature was increased to 25°C and the solution was stirred for 60 minutes. After addition of 210 g of the complex the solution was stirred for an additional two hours. That mixture was pumped at 5 1/h to the rotor stator with the rotor stator pair 4M. In the rotor stator with a tip speed of 4 m/s the mixture was mixed with a flow of 32 1/h of hexadecafluoro-1,3-dimethylcyclohexane thus forming an emulsion. The droplets in the emulsion were solidified by an excess flow of 450 l/h hexadecafluoro-1,3-dimethylcyclohexane at a temperature of 76°C in a Teflon hose. The hose was connected to a jacketed 160 dm$^3$ stainless steel reactor equipped with a helical mixing element. In this reactor the catalyst particles were separated from the hexadecafluoro-1,3-dimethylcyclohexane by density difference. After the complex solution had been utilised the catalyst particles were dried in the 160 dm$^3$ reactor at a temperature of 70°C and a nitrogen flow of 5 kg/h for 7 h.

Porosity and surface area below the detection limit.

| | |
|---|---|
| mol ratio Co/M (Al/Zr): | 260 mol/mol |
| Mean particle size: | 26 $\mu$m |
| Zr content: | 0.53 wt-% |
| Al content: | 34.5 wt-% |

The polymers used in this invention (CE1, E1, E2, except CE2) were produced employing above mentioned catalyst in a continuous two step polymerization process consisting of a bulk polymerization process (loop reactor) and a gas phase polymerization step. Prior to entering the bulk polymerization step, the catalyst is pre-polymerized in a loop-type pre polymerization reactor. Hydrogen levels in the pre polymerization reactor, in the loop reactor and the gas phase reactors were different respectively and adjusted so that the molecular weight (MFR) of the polymer from the first polymerization step was different from the molecular weight (MFR) of the polymer from the second polymerization step. The weight fraction of loop product (split) can be varied between 30 and 70wt%. Temperature in the prepolymerisation reactor was 35 °C, in the loop reactor 70 °C (CE1, E1) or 75 °C (E2), and in the gas phase reactors 85 °C: pressure in the prepolymerisation and in the loop reactor 53 bar, and in the gas phase 30 bar (CE1, E1) or 25 bar (E2). The splits and other process parameters used for creating CE1, E1 and E2 are given in table 1.

**Table 1:** Preparation of E1, E1 and CE1

| | | CE 1 | E1 | E2 |
|---|---|---|---|---|
| Split; loop-fraction | [wt%] | 64.0 | 42.0 | 45 |
| prepolymerisation | | | | |

(continued)

|  |  | CE 1 | E1 | E2 |
|---|---|---|---|---|
| Catalyst feed | [g/h] | 1.7 | 1.9 | 2.3 |
| Propylene feed | [kg/h] | 54 | 55 | 62 |
| Hydrogen feed | [g/h] | 0.5 | 0.4 | 1.8 |
| Residence time | [h] | 0.4 | 0.4 | 0.4 |
| Loop reactor |  |  |  |  |
| H2/C3 | [mol/kmol] | 0.07 | 0.06 | 0.07 |
| Production rate | [kg/h] | 31 | 29 | 23 |
| $MFR_2$ | [g/10min] | 0.7 | 1.1 | 0.9 |
| split | [wt%] | 64 | 42 | 45 |
| 1.GPR |  |  |  |  |
| H2/C3 | [mol/kmol] | 3.6 | 2.3 | 1.5 |
| Production rate | [kg/h] | 16 | 28 | 29 |
| $MFR_2$* | [g/10min] | 2.0 | 4.4 | 3.2 |
| split | [wt%] | 34 | 41 | 55 |
| 2.GPR |  |  |  |  |
| H2/C3 | [mol/kmol] | 1.5 | 3.0 |  |
| Production rate | [kg/h] | 1 | 12 |  |
| $MFR_2$** | [g/10min] | 1.6 | 5.0 |  |
| split | [wt%] | 2 | 17 |  |
| Final MFR2 (pellets) | [g/10min] | 2 | 5.9 | 2.1 |

* LG(1/MFR1)*wfl + LG(1/MFR2)*wf-2 = LG(1/MFRtotal), wherein MFR1 is the $MFR_2$ of the polypropylene produced in the loop reactor MFR2 is the calculated $MFR_2$ of the polypropylene produced in the 1 GPR und MFRtotal is the $MFR_2$ measured for the polypropylene composition obtained in the 1GPR
** LG(1/MFR1)*wfl + LG(1/MFR2)*wf-2 = LG(1/MFRtotal), wherein MFR1 is the $MFR_2$ of the polypropylene composition obtained 1GPR MFR2 is the calculated $MFR_2$ of the polypropylene produced in the 2GPR und MFRtotal is the $MFR_2$ measured for the polypropylene composition obtained in the 2GPR

CE1, E1 and E2 were collected from the process as powder and subjected to pelletizing and stabilization with Irganox 1010 (4500ppm).

**Comparative example 2 (CE 2)** is the commercial product HB311 BF of Borealis AG CE1, CE2, E1 and E2 were subjected to the following work flow to create the BOPP films: The materials were extruded and cast onto a chill roll to generate quenched film sheets. Settings used were according to table 2

**Table 2:** Cast Film process parameters

| Extruder | Melt temperature | Chill roll temperature | Cast film thickness |
|---|---|---|---|
| Brabender single screw, 19mm, 1:3 conical screw design, screen pack | 230°C | 90°C | 500μm |

From each cast film, specimens of size 8.5 by 8.5 cm were cut from the central area of the film. These specimens were subjected to a biaxial orientation process on a laboratory BOPP machine. The square sized specimens were fixed in the stretching frame of the Karo IV stretcher by five clamps on each side. The stretching frame extends and stretches the cast film by a factor of five on each side, the draw ratio is thus 5X5. After the stretching process at given settings, the BOPP film was released from the stretching frame and subjected to the breakdown testing as described. The workflow just described cast film making biaxial orientation and including the breakdown testing was repeated for each material. Reported final BDV results are averages from the two measurements.

**Table 3**: BOPP process parameters

| Biaxial orientation machine | Stretching temp. | Stretching speed | BOPP film thickness | Draw ratio |
|---|---|---|---|---|
| Karo IV Laboratory Stretcher, Brückner Maschinenbau GmbH, Germany | 147°C | 800%/s | 20 $\mu$m | 5X5 |

**Table 4:** Properties

| | | CE 1 | CE 2 | E1 | E2 |
|---|---|---|---|---|---|
| MW | [kg/mol] | 341 | 380 | 260 | 311 |
| MWD | [-] | 4.5 | 7.3 | 3.5 | 3.4 |
| MFR$_2$ | [g/10min] | 2.0 | 2.2 | 5.9 | 2.1 |
| XCS | [wt.-%] | 0.8* | 3.5 | 0.5* | 0.7* |
| XHI | [wt.-%] | 0 | 0 | 0 | 0 |
| Tm | [°C] | 152.8 | 162.3 | 151.8 | 152.6 |
| Tc | [°C] | 112.9 | 112.7 | 113.4 | 114.3 |
| g' | [-] | 0.993 $\pm$0.044 | 0.987$\pm$0.006 | 0.939$\pm$0.008 | 0.970$\pm$0.014 |
| Si | [ppm] | <0.5 | <0.5 | <0.5 | 0.5 |
| Ti | [ppm] | <0.5 | 1.5 | <0.5 | 0.5 |
| TM** | [MPa] | 1222 | | 1317 | 1261 |
| BDV | [kV/mm] 5X5 | 302 $\pm$ 25.1 | 309 $\pm$ 16 | 325$\pm$15 | 312$\pm$12 |
| $\beta$ | [-] | 8 | 12 | 14 | 17 |
| * measured on reactor powder ** tensile modulus | | | | | |

**Table 5:** SIST of CE 1

| T Range [°C] | Lc range [nm] | $\Delta$H [J/g] | Fraction [wt.-%] |
|---|---|---|---|
| 50 - 60 | 2.52 - 2.73 | 0 | 0 |
| 60-70 | 2.74-2.97 | 0 | 0 |
| 70-80 | 2.98-3.25 | 0 | 0 |
| 80 - 90 | 3.26 - 3.60 | 0 | 0 |
| 90 - 100 | 3.61 - 4.03 | 0.08239 | 0.07 |
| 100 - 110 | 4.04 - 4.57 | 0.1769 | 0.17 |
| 110 - 120 | 4.58 - 5.28 | 1.503 | 1.43 |
| 120 - 130 | 5.29 - 6.26 | 3.848 | 3.66 |
| 130 - 140 | 6.27 - 7.69 | 9.969 | 9.49 |

(continued)

| T Range [°C] | Lc range [nm] | ΔH [J/g] | Fraction [wt.-%] |
|---|---|---|---|
| 140-150 | 7.70-9.95 | 33.26 | 31.65 |
| ISO - 160 | 9.96 - 14.09 | 38.12 | 36.27 |
| > 160 | > 14.09 | 18.14 | 17.26 |

**Table 6:** SIST of CE 2

| T Range [°C] | Lc range [nm] | ΔH [J/g] | Fraction [wt.-%] |
|---|---|---|---|
| 50 - 60 | 2.52 - 2.73 | 0 | 0 |
| 60-70 | 2.74-2.97 | 0 | 0 |
| 70-80 | 2.98-3.25 | 0 | 0 |
| 80 - 90 | 3.26 - 3.60 | 0 | 0 |
| 90 - 100 | 3.61 - 4.03 | 0 | 0 |
| 100 - 110 | 4.04 - 4.57 | 0.068574 | 0.06 |
| 110 - 120 | 4.58 - 5.28 | 0.3764 | 0.35 |
| 120 - 130 | 5.29 - 6.26 | 1.02 | 0.96 |
| 130 - 140 | 6.27 - 7.69 | 3.182 | 2.99 |
| 140 - 150 | 7.70 - 9.95 | 12.3 | 11.55 |
| 150 - 160 | 9.96 - 14.09 | 31.55 | 29.62 |
| > 160 | > 14.09 | 58.156 | 54.06 |

**Table 7:** SIST of E 1

| T Range [°C] | Lc range [nm] | ΔH [J/g] | Fraction [wt.-%] |
|---|---|---|---|
| 50-60 | 2.52-2.73 | 0 | 0 |
| 60 - 70 | 2.74 - 2.97 | 0.08982 | 0.082 |
| 70 - 80 | 2.98 - 3.25 | 0.2205 | 0.20 |
| 80 - 90 | 3.26 - 3.60 | 0.4576 | 0.42 |
| 90 - 100 | 3.61 - 4.03 | 0.7457 | 0.68 |
| 100 - 110 | 4.04 - 4.57 | 0.864 | 0.79 |
| 110 - 120 | 4.58 - 5.28 | 2.322 | 2.11 |
| 120 - 130 | 5.29 - 6.26 | 4.933 | 4.49 |
| 130-140 | 6.27-7.69 | 11.03 | 10.04 |
| 140 - 150 | 7.70 - 9.95 | 32.93 | 29.96 |
| 150 - 160 | 9.96 - 14.09 | 36.16 | 32.90 |
| > 160 | > 14.09 | 20.17 | 18.35 |

**Table 8:** SIST of E 2

| T Range [°C] | Lc range [nm] | ΔH [J/g] | Fraction [wt.-%] |
|---|---|---|---|
| 50 - 60 | 2.52 - 2.73 | 0 | 0 |

(continued)

| T Range [°C] | Lc range [nm] | $\Delta$ H [J/g] | Fraction [wt.-%] |
|---|---|---|---|
| 60 - 70 | 2.74 - 2.97 | 0 | 0 |
| 70-80 | 2.98-3.25 | 0 | 0 |
| 80 - 90 | 3.26 - 3.60 | 0.07929 | 0.08 |
| 90 - 100 | 3.61 - 4.03 | 0.2756 | 0.27 |
| 100 - 110 | 4.04 - 4.57 | 0.3727 | 0.36 |
| 110 - 120 | 4.58 - 5.28 | 1.573 | 1.53 |
| 120 - 130 | 5.29 - 6.26 | 3.932 | 3.82 |
| 130 - 140 | 6.27 - 7.69 | 9.857 | 9.59 |
| 140 - 150 | 7.70-9.95 | 31.16 | 30.31 |
| 150 - 160 | 9.96 - 14.09 | 35 | 34.051 |
| > 160 | > 14.09 | 20.53 | 19.97 |

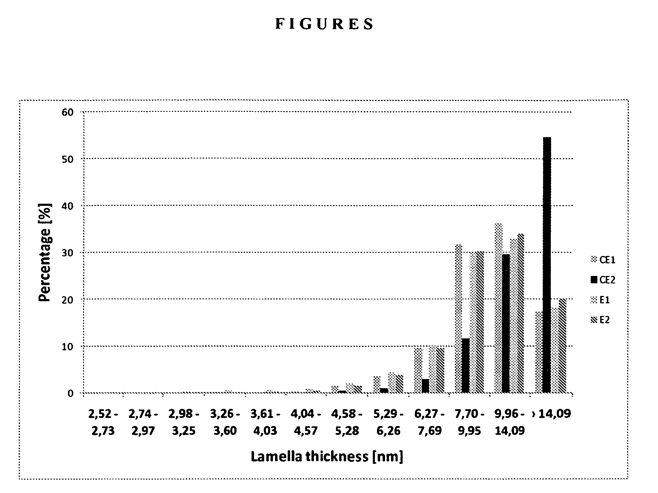

## Claims

1. Polypropylene having

   (a) a melting temperature ($T_m$) measured according to ISO 11357-3 of at least 151.0 °C,
   (b) a xylene cold soluble fraction (XCS) of not more than 1.5 wt.%,
   (c) 45.0 to 67.0 wt-%. of a crystalline fraction having a lamella thickness in the range of 7.70 to 14.09 nm. wherein said fraction is determined by the stepwise isothermal segregation technique (SIST), and
   (d) at least 18.0 wt-%. of a crystalline fraction having a lamella thickness of more than 14.09 nm, wherein said fraction is determined by the stepwise isothermal segregation technique (SIST).

2. Polypropylene according to claim 1, wherein the polypropylene is a propylene homopolymer.

3. Polypropylene according to claim 1 or 2, wherein the polypropylene has a molecular weight distribution (MWD) measured according to ISO 16014 of at least 2.8.

4. Polypropylene according to any one of the preceding claims, wherein the polypropylene has a melt flow rate $MFR_2$ (230 °C) measured according to ISO 1133 of more than 2.0 g/10min.

5. Polypropylene according to any one of the preceding claims, wherein the polypropylene has crystallization temperature ($T_c$) measured according to ISO 11357-3 of at least 113 °C.

6. Polypropylene according to any one of the preceding claims, wherein the polypropylene has a branching index g' of at least 0.9.

7. Polypropylene according to any one of the preceding claims, wherein the silicon residue within the polypropylene is below 0.5 ppm.

8. Polypropylene according to any one of the preceding claims, wherein the polypropylene is a biaxially oriented film.

9. Use of a polypropylene according to any one of the preceding claims to accomplish a value of the β-parameter (Weibull-parameter) of the electrical breakdown measured according to IEC-60243 of more than 8, preferably of more than 12.

10. Biaxially oriented polypropylene film, wherein the polypropylene is defined according to any one of the preceding claims 1 to 7.

11. Capacitor film comprising a polypropylene according to any one of the preceding claims 1 to 8 or a biaxially oriented polypropylene film according to claim 10.

12. Process for the preparation of a polypropylene according to any one of the preceding claims 1 to 7 comprising the step of polymerizing propylene and optionally a C2 to C10 $\alpha$-olefin different to propylene in the presence of a catalyst system having a surface area measured according to ASTM D 3663 of below 20 m$^2$/g and comprising a catalyst being the transition metal compound of formula (I)

$$(CP)_2RZrX_2 \qquad (I)$$

wherein

X is independently a monovalent anionic ligand, such as a $\sigma$-ligand.
Cp is an organic ligand selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl, with the proviso that both Cp-ligands are selected from the above stated group and both Cp-ligands are chemically the same, i.e. are identical,
R is a bridging group linking the two Cp ligands, wherein R has the formula (II)

$$-Y(R')_2- \qquad (II)$$

wherein

Y is C, Si or Ge, preferably Si,
R' is $C_1$ to $C_{20}$ alkyl, $C_4$ to $C_{10}$ cyclo-alkyl, $C_6$-$C_{12}$ aryl, $C_7$-$C_{12}$ arylalkyl, or trimethylsilyl,

with the proviso that both R'-residues are selected from the above stated group and both R'-residues are chemically different.

**Patentansprüche**

1. Polypropylen, aufweisend:

(a) eine gemäß ISO 11357-3 gemessene Schmelztemperatur ($T_m$) von wenigstens 151,0°C,
(b) eine Xylol-kaltlösliche Fraktion (XCS) von nicht mehr als 1,5 Gew.-%,
(c) 45,0 bis 67,0 Gew.-% einer kristallinen Fraktion, die eine Lamellendicke im Bereich von 7,70 bis 14,09 nm besitzt, wobei die Fraktion durch schrittweise isothermale Segregationstechnik (SIST) bestimmt ist, und
(d) wenigstens 18,0 Gew.-% einer kristallinen Fraktion, die eine Lamellendicke von mehr als 14,09 nm besitzt, wobei die Fraktion durch schrittweise isothermale Segregationstechnik (SIST) bestimmt ist.

2. Polypropylen nach Anspruch 1, bei dem das Polypropylen ein Polypropylenhomopolymer ist.

3. Polypropylen nach Anspruch 1 oder 2, bei dem das Polypropylen eine gemäß ISO 16014 gemessene Molekulargewichtsverteilung (MWD) von wenigstens 2,8 besitzt.

4. Polypropylen nach einem der vorherigen Ansprüche, bei dem das Polypropylen einen gemäß ISO 1133 gemessenen Schmelzflussindex MFR$_2$ (230 °C) von mehr als 2,0 g/10 min besitzt.

5. Polypropylen nach einem der vorherigen Ansprüche, bei dem das Polypropylen eine gemäß ISO 11357-3 gemessene Kristallisationstemperatur ($T_c$) von wenigstens 113 °C besitzt.

6. Polypropylen nach einem der vorherigen Ansprüche, bei dem das Polypropylen einen Verzweigungsindex g' von wenigstens 0.9 besitzt.

7. Polypropylen nach einem der vorherigen Ansprüche, bei dem der Siliziumrückstand innerhalb des Polypropylens unter 0,5 ppm beträgt.

**8.** Polypropylen nach einem der vorherigen Ansprüche, bei dem das Polypropylen ein biaxial orientierter Film ist.

**9.** Verwendung eines Polypropylens nach einem der vorherigen Ansprüche, um einen gemäß IEC-60243 gemessenen Wert des β-Parameters (Weibull-Parameters) des elektrischen Durchschlags von mehr als 8, vorzugsweise mehr als 12, zu erreichen.

**10.** Biaxial orientierter Polypropylenfilm, bei dem das Polypropylen gemäß einem der vorherigen Ansprüche 1 bis 7 definiert ist.

**11.** Kondensatorfilm, enthaltend ein Polypropylen nach einem der vorherigen Ansprüche 1 bis 8 oder einen biaxial orientierten Polypropylenfilm nach Anspruch 10.

**12.** Verfahren zur Herstellung eines Polypropylens nach einem der vorherigen Ansprüche 1 bis 7, umfassend den Schritt des Polymerisierens von Propylen und wahlweise eines sich von Propylen unterscheidenden C2- bis C10-α-Olefins in der Gegenwart eines Katalysatorsystems, das eine gemäß ASTM D 3663 gemessene Oberfläche von unter 20 $m^2/g$ besitzt und einen Katalysator enthält, der die Übergangsmetallverbindung der Formel (I) ist

$$(Cp)_2RZrX_2 \qquad (I),$$

wobei

X unabhängig ein monovalenter anionischer Ligand ist, wie etwa ein σ-Ligand,
Cp ein organischer Ligand ist, ausgewählt aus der Gruppe, die aus unsubstituiertem Cyclopentadienyl, unsubstituiertem Indenyl, unsubstituiertem Tetrahydroindenyl, unsubstituiertem Fluorenyl, substituiertem Cyclopentadienyl, substituiertem Indenyl, substituiertem Tetrahydroindenyl und substituiertem Fluorenyl besteht,
R eine Brückengruppe ist, die die zwei Cp-Liganden verbindet, wobei R die Formel (II) besitzt

$$-Y(R')_2 \qquad (II),$$

wobei

Y C, Si oder Ge ist, vorzugsweise Si,
R' $C_1$- bis $C_{20}$-Alkyl, $C_4$- bis $C_{10}$-Cycloalkyl, $C_6$- bis $C_{12}$-Aryl oder Trimethylsilyl ist,

mit der Bedingung, dass beide R'-Reste aus der oben genannten Gruppe ausgewählt sind und beide R'-Reste chemisch unterschiedlich sind.


**Revendications**

**1.** Polypropylène ayant

(a) une température de fusion ($T_f$) mesurée selon la norme ISO 11357-3 d'au moins 151,0°C,
(b) une fraction soluble à froid dans le xylène (XCS) ne dépassant pas 1,5 % en poids,
(c) de 45,0 à 67,0 % en poids d'une fraction cristalline ayant une épaisseur lamellaire dans la plage de 7,70 à 14,09 nm, ladite fraction étant déterminée par la technique de ségrégation isotherme par étapes (SIST), et
(d) au moins 18,0 % en poids d'une fraction cristalline ayant une épaisseur lamellaire supérieure à 14,09 nm, ladite fraction étant déterminée par la technique de ségrégation isotherme par étapes (SIST).

**2.** Polypropylène selon la revendication 1, dans lequel le polypropylène est un homopolymère de propylène.

**3.** Polypropylène selon la revendication 1 ou 2, dans lequel le polypropylène a une distribution de poids moléculaire (DPM) mesurée selon la norme ISO 16014 d'au moins 2,8.

**4.** Polypropylène selon l'une quelconque des revendications précédentes, dans lequel le polypropylène a un indice de fluidité $MFR_2$ (230°C) mesuré selon la norme ISO 1133 supérieur à 2,0 g/10 min.

**5.** Polypropylène selon l'une quelconque des revendications précédentes, dans lequel le polypropylène a une température de cristallisation ($T_c$) mesurée selon la norme ISO 11357-3 d'au moins 113°C.

6. Polypropylène selon l'une quelconque des revendications précédentes, dans lequel le polypropylène a un indice de ramification g' d'au moins 0,9.

7. Polypropylène selon l'une quelconque des revendications précédentes, dans lequel le résidu silicium à l'intérieur du polypropylène est inférieur à 0,5 ppm.

8. Polypropylène selon l'une quelconque des revendications précédentes, dans lequel le polypropylène est un film à orientation biaxiale.

9. Utilisation d'un polypropylène selon l'une quelconque des revendications précédentes pour obtenir une valeur du paramètre β (paramètre de Weilbull) de la rupture électrique mesurée selon la norme IEC-60243 supérieure à 8, de préférence supérieure à 12.

10. Film de polypropylène à orientation biaxiale, dans lequel le polypropylène est défini selon l'une quelconque des revendications précédentes 1 à 7.

11. Film condensateur comprenant un polypropylène selon l'une quelconque des revendications 1 à 8 ou un film en polypropylène à orientation biaxiale selon la revendication 10.

12. Procédé de préparation d'un polypropylène selon l'une quelconque des revendications 1 à 7, comprenant l'étape consistant à polymériser un propylène et facultativement une α-oléfine en $C_2$ à $C_{10}$ différente du propylène en présence d'un système de catalyseur ayant une surface mesurée selon la norme ASTM D 3663 inférieure à 20 $m^2$/g et comprenant un catalyseur qui est le composé de métal de transition de formule (I)

$$(Cp)_2RZrX_2 \qquad (I)$$

dans laquelle

X est indépendamment un ligand anionique monovalent, tel qu'un ligand σ,
Cp est un ligand organique sélectionné dans le groupe constitué par un groupe cyclopentadiényle non substitué, indényle non substitué, tétrahydroindényle non substitué, fluorényle non substitué, cyclopentadiényle substitué, indényle substitué, tétrahydroindényle substitué et fluorényle substitué, à condition que les deux ligands Cp soient sélectionnés dans le groupe indiqué ci-dessus et que les deux ligands Cp soient chimiquement les mêmes, c'est-à-dire identiques,
R est un groupe pontant liant les deux ligands Cp, dans lequel R a la formule (II)

$$-Y(R')_2- \qquad (II)$$

dans laquelle

Y est C, Si ou Ge, de préférence Si,
R' est alkyle en $C_1$ à $C_{20}$, cycloalkyle en $C_4$ à $C_{10}$, aryle en $C_6$ à $C_{12}$, arylalkyle en $C_7$ à $C_{12}$ ou triméthylsilyle,

à condition que les deux résidus R' soient sélectionnés dans le groupe indiqué ci-dessus et que les deux résidus R' soient chimiquement différents.

# FIGURES

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0148034 A
- WO 03051934 A
- WO 9428034 A
- EP 0887379 A
- WO 9212182 A
- WO 9722633 A
- WO 2005105863 A2

**Non-patent literature cited in the description**

- **T. Hayashi ; Y. Inoue ; R. Chüjö ; T. Asakura.** *Polymer,* 1988, vol. 29, 138-43
- **Chujo R et al.** *Polymer,* 1994, vol. 35, 339
- **G. Saunders ; P. A. G: Cormack ; S. Graham ; D. C. Sherrington.** *Macromolecules,* 2005, vol. 38, 6418-6422
- Molecular Weight Sensitive Detectors. **C. Jackson ; H. G. Barth.** Handbook of Size Exclusion Chromatography and related techniques. Marcel Dekker, 2004, 103